# EUROPÄISCHE PATENTSCHRIFT

(11) **EP 3 109 071 B1**
(45) Veröffentlichungstag und Bekanntmachung des Hinweises auf die Patenterteilung: **03.01.2018**
(21) Anmeldenummer: 16175805.7
(22) Anmeldetag: 22.06.2016
(51) Int. Cl.: B60G 7/00, B60G 21/05, B62D 17/00

(54) **RADAUFHÄNGUNG MIT VIRTUELLER LENKACHSE**
WHEEL SUSPENSION WITH VIRTUAL STEERING AXLE
SUSPENSION DE ROUE COMPRENANT UN AXE DE DIRECTION VIRTUEL

(30) Priorität: 23.06.2015 DE 102015110036
(43) Veröffentlichungstag der Anmeldung: 28.12.2016
(73) Patentinhaber: Benteler Automobiltechnik GmbH, 33102 Paderborn (DE)
(72) Erfinder: Schultz, Erik, 33100 Paderborn (DE)
(74) Vertreter: Griepenstroh, Jörg

(56) Entgegenhaltungen:
- EP-A1- 1 757 468
- WO-A1-2004/101298
- DE-A1-102008 031 123
- DE-A1-102011 013 265
- JP-A- S5 918 005
- JP-A- S6 250 211

## Beschreibung

Die vorliegende Erfindung betrifft eine Radaufhängung für eine Verbundlenkerachse eines Kraftfahrzeuges gemäß den Merkmalen im Oberbegriff von Patentanspruch 1.

Für eine Kraftfahrzeugachse ist aus dem Stand der Technik eine Verbundlenkerachse bekannt, welche ein Querrohr aufweist mit an dem Querrohr angeordneten Längsschwingen. Am Ende einer jeden Längsschwinge ist dann eine Radaufhängung gekoppelt, so dass beim Einfedern des Rades die Längsschwinge eine Bewegung in Kraftfahrzeugvertikalrichtung erfährt und dabei eine Torsion des Querrohrs hervorruft.

Eine Verbundlenkerachse ist eine eher einfache Ausgestaltung einer Radaufhängung für ein Kraftfahrzeug. Um dennoch das Fahrverhalten des mit einer Verbundlenkerachse ausgestatteten Kraftfahrzeuges zu verbessern, ist es aus dem Stand der Technik bekannt, die Radaufhängung elastokinematisch zu gestalten derart, dass bei auf das Rad wirkender Seitenführungskraft und/oder Bremskraft eine zusätzliche Stellung des Rades in negativen Sturz und/oder ein Steuern in Vorspur hervorgerufen wird. Hierzu schwenkt ein Radträger um eine virtuelle Lenkachse. Dies ist beispielsweise aus der DE 10 2011 013 265 A1 bekannt.

Weiterhin ist aus der DE 10 2008 031 123 A1 ein Radaufhängung für eine Verbundlenkerachse eines Kraftfahrzeuges bekannt, bei welcher durch Einwirkung einer Seitenführungskraft auf das Rad ein Blechbauteil als Radträgeraufnahme elastisch in Kraftfahrzeugquerrichtung verformt wird und eine Vorspuränderung hervorruft.

Eine ähnliche Radaufhängung ist auch aus der EP 1 757 468 A1 bekannt.

Aufgabe der vorliegenden Erfindung ist es daher, ausgehend vom Stand der Technik eine derartige Radaufhängung weiterzubilden, so dass ein verbessertes Fahrverhalten, insbesondere Vorspursteuern, zu verzeichnen ist.

Die zuvor genannte Aufgabe wird erfindungsgemäß mit den Merkmalen des Patentanspruches 1 gelöst.

Vorteilhafte Ausgestaltungsvarianten der vorliegenden Erfindung sind Gegenstand der abhängigen Patentansprüche.

Die Radaufhängung für eine Verbundlenkerachse eines Kraftfahrzeuges weist einen Radträger auf, wobei der Radträger an einer Radträgerhalterung derart elastokinematisch gekoppelt ist, dass bei einer auf das an dem Radträger angeordneten Rad wirkenden Seitenführungskraft und/oder Bremskraft der Radträger um eine virtuelle Lenkachse in Vorspur schwenkt. Die elastokinematische Koppelung ist durch drei Lager ausgebildet, wobei mindestens zwei Lager davon elastische Lager sind und ein weiteres Lager mindestens einen Freiheitsgrad aufweist. Die Verbundlenkerachse selbst weist ein Querrohr und zwei sich davon erstreckende Längsschwingen auf, wobei jeweils eine Radträgerhalterung an einem Ende einer Längsschwinge gekoppelt ist. Erfindungsgemäß zeichnet sich die Radaufhängung dadurch aus, dass im Bereich eines in Fahrzeuglängsrichtung vorderen elastischen Lagers zwischen Radträgerhalterung und Längsschwinge ein Nachgiebigkeitselement eingegliedert ist.

Das in Vorspur schwenken wird dabei während einer Kurvenfahrt, mithin bei Angriff einer Seitenführungskraft auf das Rad aufgrund einer negativen Nachlaufstrecke, welche sich zwischen virtueller Lenkachse und Radaufstandpunkt ergibt, hervorgerufen. Bei einem Bremsvorgang wird ein in Vorspursteuern aufgrund eines negativen Lenkrollradiusses hervorgerufen.

Die elastischen Lager sind dabei insbesondere Gummi-Feststofflager, insbesondere Gummimetalllager, welche als Hülsenlager aber auch als Scheibenlager mithin Gummimetallscheibenlager ausgebildet sein können. Es handelt sich dabei um zwei auf die Kraftfahrzeugvertikalrichtung untere Lager, wobei ein Lager bezogen auf die Kraftfahrzeuglängsrichtung vorne angeordnet und ein weiteres Lager hinten angeordnet ist jeweils bezogen auf einen Radmittelpunkt. Die zwei unteren Lager sind derart ausgebildet, dass ein von diesem gebildeter Momentanpol außerhalb des Kraftfahrzeuges liegt, so dass der Momentanpol zusammen mit einem oberen Lager mit mindestens einem Freiheitsgrad die virtuelle Lenkachse ausbildet. Bei dem oberen Lager kann es sich ebenfalls um ein elastisches Lager, insbesondere auch um ein Gummi-Feststofflager, handeln. Es kann sich jedoch auch um ein Kugelgelenk handeln. Auch ist es vorstellbar, dass das weitere Lager, insbesondere das obere Lager, eine Feststoffstruktur ist, die sich elastisch verformt.

Das Nachgiebigkeitselement ist als Abstützblech ausgebildet. Insbesondere ist das Abstützblech ein einlagiges Querblech mit einer Ausnehmung, welche insbesondere als Langloch bzw. als von der Seite sich erstreckender Einschnitt ausgebildet ist. Auch kann das Abstützblech als Spangenblech ausgebildet sein. Durch seine Struktur als Spangenblech oder durch die Ausnehmung weist das Abstützblech eine Nachgiebigkeit auf. Es erfährt im Betrieb unter Krafteinwirkung eine elastische Verformung. Es handelt sich somit bei dem Nachgiebigkeitselement um eine derartige strukturelle Schwächung, dass dieses keine schubstarre Verbindung zwischen Radträgerhalterung und dem Ende der Längsschwinge ausbildet, sondern sich elastisch verformt. Insbesondere handelt es sich bei dem Nachgiebigkeitselement somit um ein metallisches, insbesondere Stahlbauteil. Das Nachgiebigkeitselement ist insbesondere als Blechbauteil ausgebildet und mit dem Ende der Längsschwinge und der Radträgerhalterung verschweißt.

Die elastische Nachgiebigkeit ist insbesondere in Kraftfahrzeugquerrichtung gerichtet, wobei die Nachgiebigkeit durch elastische Materialverformung in Folge einer Krafteinwirkung hervorgerufen wird. Diese Krafteinwirkung hat in Verbindung mit der Nachgiebigkeit in Kraftfahrzeugquerrichtung den Vorteil, dass nur unter Einfluss der Seitenführungskraft eine elastische Deformation hervorgerufen wird. Unter Einwirkung der Bremskraft verformt sich das Nachgiebigkeitselement nicht. Somit wird ein zusätzliches in Vorspursteuern aufgrund des Nachgiebigkeitselementes bei Kurvenfahrt hervorgerufen, jedoch kein zusätzliches in Vorspursteuern bei einem Bremsvorgang. Dadurch lässt sich die im Betrieb des Kraftfahrzeuges auftretende Vorspuränderung unter Seitenkraft und Bremskraft unabhängig voneinander gezielt einstellen. Dies verbessert das Fahrverhalten und minimiert den Reifenverschleiß. Insbesondere wird somit bei elastischer Deformation des Nachgiebigkeitselementes die Sturzänderung des Rades bei gleichbleibender Spuränderung verringert. Die oben genannten Vorteile sind hier entsprechend. Besonders bevorzugt ist das Nachgiebigkeitselement hierzu weicher als das im Bereich des Nachgiebigkeitselementes angeordnete elastische Lager ausgebildet.

Der Radträgerhalter ist im Übrigen mit dem Ende der Längsschwinge insbesondere schubstarr gekoppelt. Bevorzugt befindet sich im mittelbaren oder unmittelbaren Bereich eines jeden Lagers eine Koppelungsstelle des Radträgerhalters mit dem Ende der Längsschwinge. Insbesondere ergeben sich somit zwei Koppelungsstellen an dem oberen und dem hinteren Lager, die jeweils schubstarr mit den Enden der Längsschwinge gekoppelt sind und die Koppelungsstelle in Form des Nachgiebigkeitselementes an dem vorderen Lager.

Weitere Vorteile, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: eine aus dem Stand der Technik bekannte teilperspektivische Ansicht einer Verbundlenkerachse mit virtueller Lenkachse;
- Figur 2: die Radaufhängung gemäß Figur 1 in vergrößerter Ansicht;
- Figur 3: eine Teilansicht mit erfindungsgemäßen Nachgiebigkeitselement;
- Figur 4A bis C: verschiedene Ausgestaltungsvarianten des erfindungsgemäßen Nachgiebigkeitselementes in Draufsicht;
- Figur 5A und: B eine erfindungsgemäße Verbundlenkerachse in Ansicht von hinten und Draufsicht.

In den Figuren werden für gleiche oder ähnliche Bauteile dieselben Bezugszeichen verwendet, auch wenn eine wiederholte Beschreibung aus Vereinfachungsgründen entfällt.

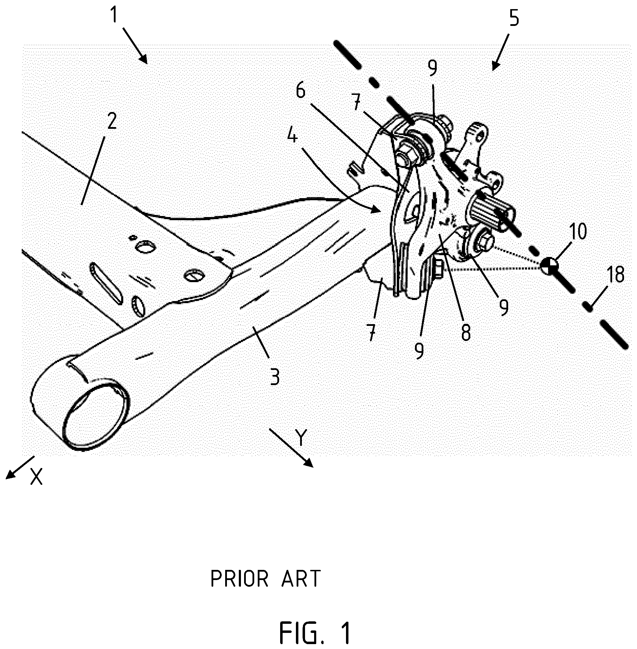

Figur 1 zeigt eine perspektivische Ansicht einer Verbundlenkerachse 1 nach dem Stand der Technik. Diese weist ein Querrohr 2 auf, welches sich in Kraftfahrzeugquerrichtung Y erstreckt. An dem Querrohr 2 sind Längsschwingen 3 angeordnet, die sich in Kraftfahrzeuglängsrichtung X erstrecken. An einem Ende 4 der Längsschwinge 3 ist eine Radaufhängung 5 dargestellt, wobei ein Radträgerhalter 6 über Koppelungsstellen 7 mit dem Ende 4 der Längsschwinge 3 schubstarr gekoppelt ist. Die auf die Bildebene bezogen hintere Koppelungsstelle ist nicht ersichtlich, jedoch vorhanden. Der Radträger 8 selbst ist wiederum mit dem Radträgerhalter 6 über elastische Lager 9 elastokinematisch gekoppelt, hier in Form von drei Gummimetalllagern. Die zwei auf die Bildebene bezogen unteren elastischen Lager 9 weisen dabei einen außerhalb befindlichen Momentalpol 10 auf, der wiederum mit dem oberen elastischen Lager 9 eine virtuelle Lenkachse 18 ausbildet. Unter Einfluss von Seitenkraft und/oder Bremskraft führt dann das nicht näher dargestellte an dem Radträger 8 befestigte Rad eine Drehbewegung in Vorspur und/oder negativen Sturz aus.

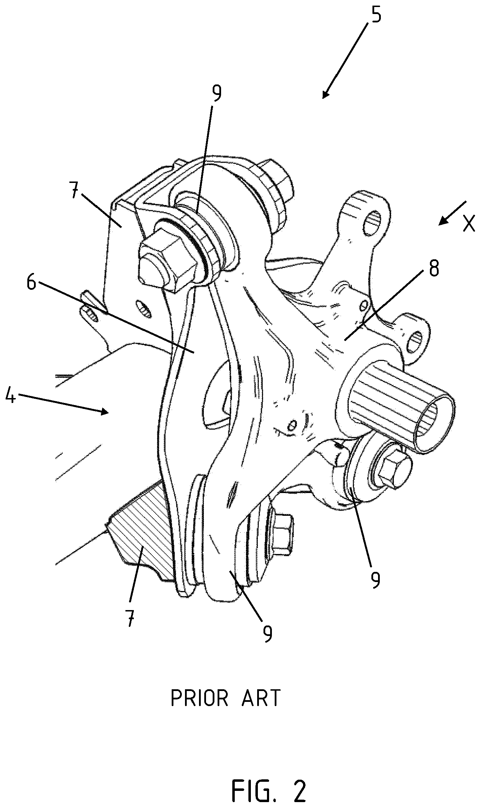

Die Radaufhängung 5 ist nochmals im Detail dargestellt in Figur 2. Hierbei gut ersichtlich ist, dass in Kraftfahrzeuglängsrichtung X die vordere Koppelungsstelle 7 als Abstützblech mit dem Ende 4 der Längsschwinge 3 gekoppelt ist. Insbesondere ist eine nicht näher dargestellte thermische Fügeverbindung hierzu ausgebildet. Die obere Koppelungsstelle 7 und die nicht ersichtliche auf die Bildebene bezogen hinter der Radträgerhalterung befindliche hintere Koppelungsstelle 7 sind entsprechend als Blechbauteil mit Schweißverbindungen ausgebildet, so dass sich jeweils eine schubstarre Koppelung mit dem Ende 4 der Längsschwinge 3 ergibt.

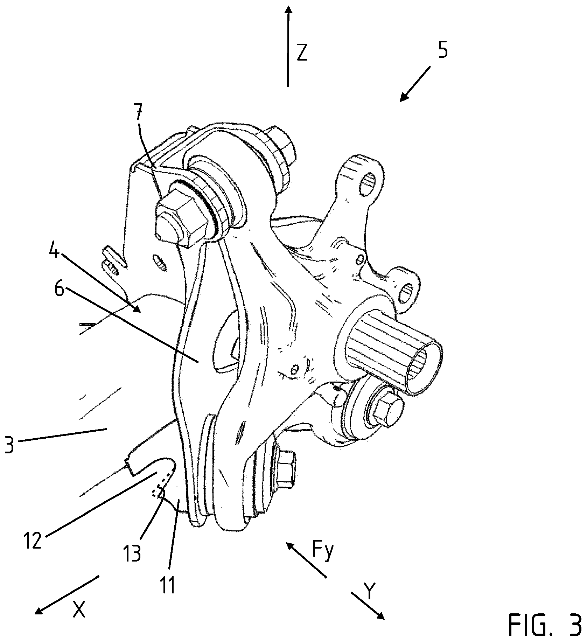

Figur 3 zeigt eine erfindungsgemäße Ausgestaltungsvariante der Radaufhängung 5. Hierbei ist die vordere Koppelungsstelle in Form eines Nachgiebigkeitselementes 11 mit einer Ausnehmung 12 ausgebildet. Wird eine Seitenkraft Fy aufgebracht, was beispielsweise in Form eines Seitenkrafteinflusses auf das nicht näher dargestellte Rad erfolgen kann, ist die vordere Koppelungsstelle 7 in Form eines Nachgiebigkeitselementes 11 mit einer Ausnehmung 12 ausgebildet. Verformt sich das Nachgiebigkeitselement 11 im Bereich der Ausnehmung 12, dargestellt anhand der gestrichelten Linie 13, so dass die Radträgerhalterung mitsamt dem Radträger 8 und dem damit gekoppelte Rad in Vorspur gedreht werden. Insbesondere wird die virtuelle Lenkachse 18 derart verlagert, dass ein stärkeres in Vorspursteuern hervorgerufen wird.

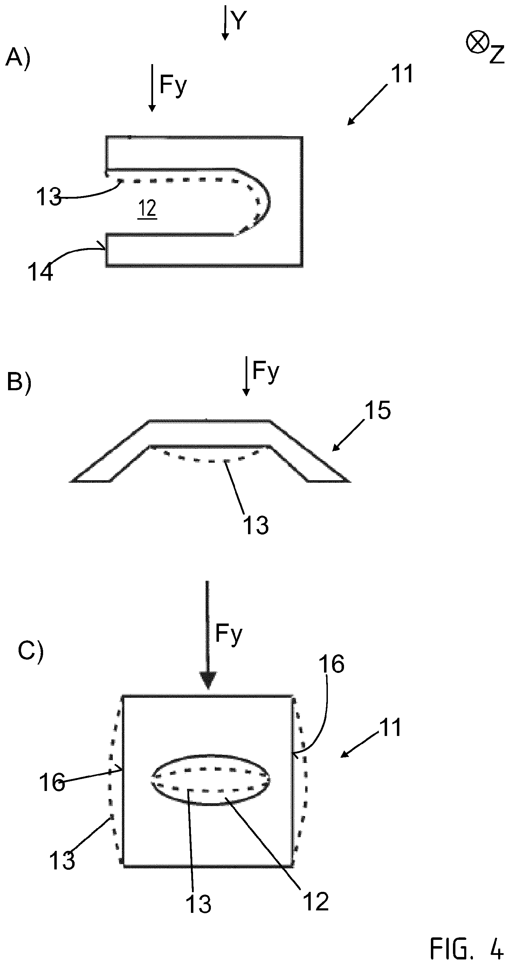

Figur 4 zeigt verschiedene Ausgestaltungsvarianten des Nachgiebigkeitselementes 11 in Draufsicht mit Blickrichtung aus der Kraftfahrzeugvertikalrichtung Z. Gemäß Figur 4A) ist eine von einem äußeren Rand 14 kommende seitliche Ausnehmung 12 in Form eines Langlochs ausgebildet. Wird eine Seitenkraft Fy in Kraftfahrzeugquerrichtung Y aufgebracht, so erfährt das Nachgiebigkeitselement 11 eine elastische Deformation in Richtung zu der gestrichelten Linie 13.

Insbesondere entspricht dies der Ausbildung eines Nachgiebigkeitselementes 11 in Form eines einlagigen Querbleches, wobei die Blechebene sich maßgeblich in Kraftfahrzeugquerrichtung Y erstreckt. Das Nachgiebigkeitselement 11 kann dabei aus einer Stahllegierung, jedoch auch aus einer Leichtmetalllegierung ausgebildet sein.

Eine alternative Ausgestaltungsvariante ist in Figur 4B dargestellt, wobei das Nachgiebigkeitselement hier als Spangenbauteil 15 ausgebildet ist. Es weist im Wesentlichen eine C-förmige Kontur auf, die ebenfalls elastisch unter Einfluss einer Seitenkraft Fy in Richtung der gestrichelten Linie 13 sich hin deformiert. Ein in unmittelbarer Nähe damit gekoppeltes elastisches Lager 9 würde somit in Kraftfahrzeugquerrichtung Y nach innen gedreht werden und dadurch wiederum ein in Vorspursteuern hervorgerufen werden.

Figur 4C zeigt eine weitere Ausgestaltungsvariante des Nachgiebigkeitselementes 11 in Form eines einschaligen Abstützbleches. Auch hier ist wiederum eine Ausnehmung 12 in Form eines elliptischen Loches bzw. elliptisch geformten Langloches vorgesehen, welche jedoch im Innenbereich ausgebildet ist. Unter Einfluss einer aufgebrachten Seitenkraft Fy wird die Ausnehmung 12 zur gestrichelten Linie 13 elastisch deformiert und die Seitenbereiche 16 des Nachgiebigkeitselementes 11 deformieren sich ebenfalls zur gestrichelten Linie 13 wie dargestellt.

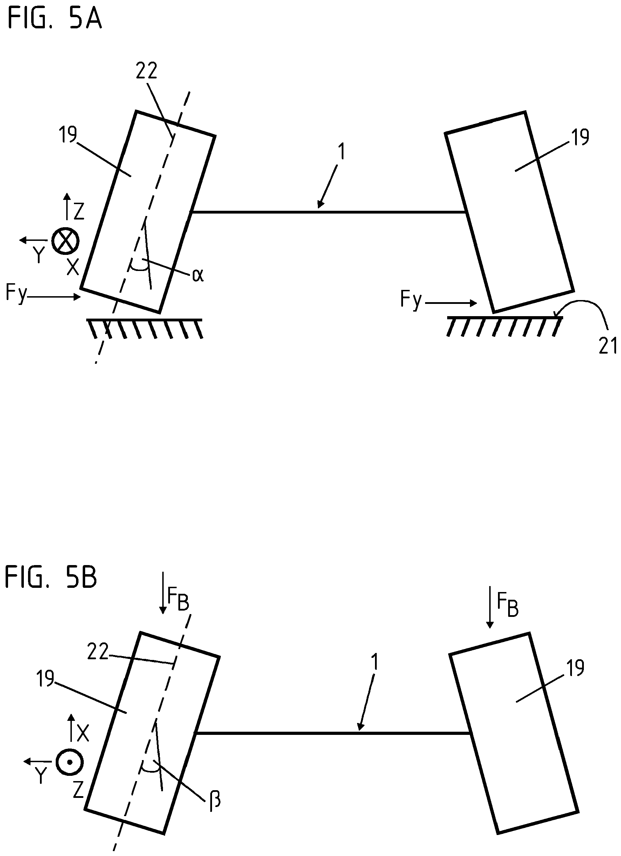

Figur 5A und B zeigen eine jeweilige Verbundlenkerachse 1 mit zwei Rädern 19 in einer Ansicht von hinten bzw. bei Figur 7B in einer Draufsicht von oben.

Gemäß Figur 5A ist eine erfindungsgemäße Verbundlenkerachse 1 dargestellt. Diese weist an jeder Seite ein Rad 19 auf. Die Räder 19 stehen auf einer Fahrbahnoberfläche 21 auf. Das Fahrzeug bewegt sich mit Fahrtrichtung in Kraftfahrzeuglängsrichtung X in die Bildebene hinein. Folglich ist die Verbundlenkerachse 1 in einer Ansicht von hinten dargestellt.

Ferner dargestellt ist der Angriff der Seitenkraft Fy an die Räder 19, beispielswese bei einer Fahrt als Rechtskurve gemäß Figur 5A.

Er ergibt sich zwischen einer Längsschnittachse 22 des Rades 19 sowie der Kraftfahrzeugvertikalrichtung Z ein Sturzwinkel a. Hier dargestellt ist ein negativer Sturz.

Figur 5B zeigt die Verbundlenkerachse 1 in einer Ansicht von oben. Die Räder 19 weisen einen Spurwinkel β zur Kraftfahrzeuglängsrichtung X auf, dargestellt ist eine Vorspur. Dargestellt ist weiterhin eine auf die Räder 19 wirkende Bremskraft FB.

### Bezugszeichen:

1 - Verbundlenkerachse
2 - Querrohr
3 - Längsschwinge
4 - Ende zu 3
5 - Radaufhängung
6 - Radträgerhalterung
7 - Koppelungsstelle
8 - Radträger
9 - elastisches Lager
10 - Momentanpol
11 - Nachgiebigkeitselement
12 - Ausnehmung
13 - gestrichelte Linie
14 - äußerer Rand
15 - Spangenblech
16 - Seitenbereich
17 - vorderer Rand
18 - virtuelle Lenkachse
19 - Rad
20 - Spur
21 - Fahrbahnoberfläche

X - Kraftfahrzeuglängsrichtung
Y - Kraftfahrzeugquerrichtung
Z - Kraftfahrzeugvertikalrichtung
FB - Bremskraft
Fy - Seiten kraft
α - Sturzwinkel
β - Spurwinkel

## Patentansprüche

1. Radaufhängung (5) für eine Verbundlenkerachse (1) eines Kraftfahrzeuges, aufweisend einen Radträger (8), wobei der Radträger (8) an einer Radträgerhalterung (6) derart elastokinematisch gekoppelt ist, dass bei einer auf das an dem Radträger (8) angeordnetem Rad (19) wirkenden Seitenführungskraft und/oder Bremskraft der Radträger (8) um eine virtuelle Lenkachse (18) in Vorspur schwenkt, wobei die elastokinematische Koppelung durch mindestens zwei elastische Lager (9) und ein weiteres Lager mit mindestens einem Freiheitsgrad ausgebildet ist und die Verbundlenkerachse (1) ein Querrohr (2) und zwei sich daran erstreckende Längsschwingen (3) aufweist, wobei eine Radträgerhalterung (6) an jeweils einem Ende (4) der Längsschwinge (3) gekoppelt ist, **dadurch gekennzeichnet, dass** im Bereich eines in Fahrzeuglängsrichtung (X) vorderen elastischen Lagers (9) zwischen Radträgerhalterung (6) und Längsschwinge (3) ein Nachgiebigkeitselement (11) eingegliedert ist, wobei das Nachgiebigkeitselement (11) ein Abstützblech ist.

2. Radaufhängung nach Anspruch 1, **dadurch gekennzeichnet, dass** das Abstützblech ein einlagiges Querblech mit einer Ausnehmung (12) ist.

3. Radaufhängung nach Anspruch 2, **dadurch gekennzeichnet, dass** die Ausnehmung (12) ein Langloch ist.

4. Radaufhängung nach Anspruch 1, **dadurch gekennzeichnet, dass** das Abstützblech als Spangenblech (15) ausgebildet ist.

5. Radaufhängung nach einem der Ansprüche 1 bis 4, **dadurch gekennzeichnet, dass** das Nachgiebigkeitselement (11) eine elastische Nachgiebigkeit in Kraftfahrzeugquerrichtung (Y) aufweist, wobei die Nachgiebigkeit durch elastische Materialverformung in Folge einer Krafteinwirkung hervorgerufen wird.

6. Radaufhängung nach einem der Ansprüche 1 bis 5, **dadurch gekennzeichnet, dass** der Radträgerhalter (6) unter Eingliederung des Nachgiebigkeitselements (11) sowie mindestens einer weiteren, schubstarre Koppelungsstelle (7) mit dem Ende (4) der Längsschwinge (3) gekoppelt ist.

7. Radaufhängung nach Anspruch 6, **dadurch gekennzeichnet, dass** zwei schubstarre Koppelungsstellen (7) vorgesehen sind, wobei bezogen auf die Fahrtrichtung eine Koppelungsstelle (7) oben an dem Radträgerhalter (6) angeordnet ist und eine Koppelungsstelle (7) eine hintere Koppelungsstelle (7) ist.

8. Radaufhängung nach einem der Ansprüche 1 bis 7, **dadurch gekennzeichnet, dass** die elastischen Lager (9) Gummi-Feststofflager sind.

9. Radaufhängung nach Anspruch 8, **dadurch gekennzeichnet, dass** die elastischen Lager (9) Gummimetalllager sind.

10. Radaufhängung nach Anspruch 8, **dadurch gekennzeichnet, dass** die elastischen Lager Gummimetallscheibenlager sind.

11. Radaufhängung nach einem der Ansprüche 1 bis 10, **dadurch gekennzeichnet, dass** das Nachgiebigkeitselement (11) nur unter Einfluss der Seitenführungskraft elastisch deformiert wird.

12. Radaufhängung nach Anspruch 11, **dadurch gekennzeichnet, dass** das Nachgiebigkeitselement (11) nicht durch Einwirkung einer Bremskraft (FB) deformiert wird.

## Claims

1. Wheel suspension (5) for a torsion beam axle (1) of a motor vehicle, having a wheel carrier (8), wherein the wheel carrier (8) is connected to a wheel carrier retention member (6) in such an elastokinematic manner that, in the event of a lateral guiding force and/or braking force acting on the wheel (19) which is arranged on the wheel carrier (8), the wheel carrier (8) pivots about a virtual steering axle (18) during toe-in, wherein the elastokinematic coupling is formed by means of at least two resilient bearings (9) and an additional bearing with at least one degree of freedom and the torsion beam axle (1) has a transverse pipe (2) and two longitudinal links (3) which extend thereon, wherein a wheel carrier retention member (6) is connected to an end (4) of the longitudinal link (3) in each case, **characterised in that**, in the region of a resilient bearing (9) which is at the front in the longitudinal vehicle direction (X), a flexibility element (11) is introduced between the wheel carrier retention member (6) and longitudinal link (3), wherein the flexibility element (11) is a metal support sheet.

2. Wheel suspension according to claim 1, **characterised in that** the metal support sheet is a single-layer transverse metal sheet with a recess (12).

3. Wheel suspension according to claim 2, **characterised in that** the recess (12) is an elongate hole.

4. Wheel suspension according to claim 1, **characterised in that** the metal support sheet is constructed as a bracket-like metal sheet (15).

5. Wheel suspension according to any one of claims 1 to 4, **characterised in that** the flexibility element (11) has a resilient flexibility in the motor vehicle transverse direction (Y), wherein the flexibility is brought about by means of resilient material deformation as a result of an action of force.

6. Wheel suspension according to any one of claims 1 to 5, **characterised in that** the wheel carrier retention member (6) with the flexibility element (11) and at least one additional rigid coupling location (7) being introduced is connected to the end (4) of the longitudinal link (3).

7. Wheel suspension according to claim 6, **characterised in that** two rigid coupling locations (7) are provided, wherein with respect to the travel direction one coupling location (7) is arranged in the upper region on the wheel carrier retention member (6) and one coupling location (7) is a rear coupling location (7).

8. Wheel suspension according to any one of claims 1 to 7, **characterised in that** the resilient bearings (9) are rubber/solid material bearings.

9. Wheel suspension according to claim 8, **characterised in that** the resilient bearings (9) are rubber/metal bearings.

10. Wheel suspension according to claim 8, **characterised in that** the resilient bearings are rubber/metal disc bearings.

11. Wheel suspension according to any one of claims 1 to 10, **characterised in that** the flexibility element (11) is resiliently deformed only under the influence of the lateral guiding force.

12. Wheel suspension according to claim 11, **characterised in that** the flexibility element (11) is not deformed by the action of a braking force (FB).

## Revendications

1. Suspension de roue (5) pour un essieu rigide de torsion (1) d'un véhicule automobile, comportant un support de roue (8),
dans lequel le support de roue (8) est couplé d'un point de vue élastocinématique à une fixation de support de roue (6) de telle sorte que, lorsqu'une force de guidage latéral et/ou de freinage agit sur la roue (19) montée sur le support de roue (8), le support de roue (8) pivote en pincement autour d'un essieu orientable (18) virtuel,
dans lequel le couplage élastocinématique est formé par au moins deux paliers (9) élastiques et un autre palier avec au moins un degré de liberté et l'essieu rigide de torsion (1) comporte un tube transversal (2) et deux bielles oscillantes longitudinales (3) qui s'étendent au niveau de celui-ci,
dans lequel une fixation de support de roue (6) est couplée à chaque fois à une extrémité (4) de la bielle oscillante longitudinale (3),
**caractérisée en ce que**, dans la zone d'un palier élastique (9) avant, dans la direction longitudinale de véhicule (X), un élément de flexibilité (11) est inséré entre la fixation de support de roue (6) et la bielle oscillante longitudinale (3), lequel élément de flexibilité (11) est une tôle de soutien.

2. Suspension de roue selon la revendication 1, **caractérisée en ce que** la tôle de soutien est une tôle transversale monocouche avec un évidement (12).

3. Suspension de roue selon la revendication 2, **caractérisée en ce que** l'évidement (12) est un trou oblong.

4. Suspension de roue selon la revendication 1, **caractérisée en ce que** la tôle de soutien est réalisée comme une tôle en agrafe (15).

5. Suspension de roue selon l'une quelconque des revendications 1 à 4, **caractérisée en ce que** l'élément de flexibilité (11) présente une flexibilité élastique dans la direction transversale de véhicule automobile (Y), laquelle flexibilité est apportée par une déformation élastique du matériau suite à l'action d'une force.

6. Suspension de roue selon l'une quelconque des revendications 1 à 5, **caractérisée en ce que** la fixation de support de roue (6) est couplée à l'extrémité (4) de la bielle oscillante longitudinale (3) via l'insertion de l'élément de flexibilité (11) et d'au moins un autre point de couplage (7) rigide.

7. Suspension de roue selon la revendication 6, **caractérisée en ce que** deux points de couplage (7) rigides sont prévus et, par rapport au sens de déplacement, un point de couplage (7) est agencé en haut au niveau de la fixation de support de roue (6) et un point de couplage (7) est un point de couplage (7) arrière.

8. Suspension de roue selon l'une quelconque des revendications 1 à 7, **caractérisée en ce que** les paliers élastiques (9) sont des paliers caoutchouc et matériau solide.

9. Suspension de roue selon la revendication 8, **caractérisée en ce que** les paliers élastiques (9) sont des paliers caoutchouc et métal.

10. Suspension de roue selon la revendication 8, **caractérisée en ce que** les paliers élastiques sont des paliers de butée caoutchouc et métal.

11. Suspension de roue selon l'une quelconque des revendications 1 à 10, **caractérisée en ce que** l'élément de flexibilité (11) n'est déformé élastiquement que sous l'influence de la force de guidage latéral.

12. Suspension de roue selon la revendication 11, **caractérisée en ce que** l'élément de flexibilité (11) n'est pas déformé par l'action d'une force de freinage (FB).
